(19)

**Europäisches Patentamt**
**European Patent Office**
**Office européen des brevets**

(11)　**EP 4 407 721 A1**

(12)　# EUROPEAN PATENT APPLICATION

(43) Date of publication:
**31.07.2024　Bulletin 2024/31**

(21) Application number: **23153090.8**

(22) Date of filing: **24.01.2023**

(51) International Patent Classification (IPC):
**H01M 8/0444** (2016.01)　　**H01M 8/04537** (2016.01)
**H01M 8/18** (2006.01)

(52) Cooperative Patent Classification (CPC):
**H01M 8/04477; H01M 8/04611; H01M 8/188**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **VoltStorage GmbH
80935 München (DE)**

(72) Inventors:
• **Ashton, Sean
85221 Dachau (DE)**

• **dos Santos, Antonio
81379 München (DE)**
• **Allebrod, Silke
85579 Neubiberg (DE)**
• **Daniel, Mark
82152 Krailling (DE)**
• **Hoffmann, Johannes
81371 München (DE)**
• **Zhang, Wenchang
81379 München (DE)**

(74) Representative: **Grünecker Patent- und
Rechtsanwälte
PartG mbB
Leopoldstraße 4
80802 München (DE)**

(54)　## SENSOR FOR MEASURING STATE OF CHARGE OF A REDOX FLOW BATTERY

(57)　The invention relates to a sensor for indicating state of charge, SOC, of battery electrolytes of a redox flow battery according to the invention comprises a negative battery electrolyte compartment containing negative battery electrolyte; a positive battery electrolyte compartment containing positive battery electrolyte; a reference electrode compartment containing a reference electrolyte, wherein the reference electrolyte is ion-conductively connected to the negative battery electrolyte and the reference electrolyte is ion-conductively connected to the positive battery electrolyte; and a voltage measurement circuit configured to measure a negative SOC potential between the negative battery electrolyte and the reference electrolyte and to measure a positive SOC potential between the positive battery electrolyte and the reference electrolyte.

FIG. 4

EP 4 407 721 A1

## Description

**Field of the Invention**

The invention relates to a sensor for indicating state of charge, SOC, and a method of determining SOC of flow battery electrolytes, and to detecting imbalance in SOC, volume and/or concentration of redox species.

**Prior Art**

The reliable production of energy from renewable sources such as wind and solar has become a major topic. The energy produced from renewable sources are typically unpredictable and there is a clear need to buffer this by storing excess energy where renewable production is high and energy demand is low, for periods of time in which renewable energy production is low but energy demand is high. One option to achieve this is to use a redox flow battery energy storage system.

Redox flow batteries will play an important role in the mix of energy storage solutions because they offer several unique advantages over other battery solutions, such as Li-ion. For example, redox flow batteries offer:

i) Low levelized cost of storage
ii) Flexible power and storage capacity (can be scaled independently)
iii) Longer lifetime (10,000 cycles without capacity loss)

A redox flow battery typically comprises of a stack and two tanks of electrolyte. The stack performs the electrochemical reaction to convert electrically energy into chemical energy stored in the electrolyte through the oxidation and reduction of redox active species in the tank electrolytes.

The conventional reactions of an all-vanadium redox flow batteries are as follows:

(-) Tank Reaction: $V^{2+} \leftrightarrow V^{3+} + e^-$
(+) Tank Reaction: $V^{4+} \leftrightarrow V^{5+} + e^-$

As the flow battery is charged/discharged the average oxidation state of the two battery electrolytes changes. The average oxidation states of each battery electrolyte at 0%, 50% and 100 % state of charge (SOC) are shown for clarity in table 1. In other words, SOC is the percentage (level) of charge of a battery electrolyte compared to the state of being fully charged (capacity), i.e. 0% = empty; 100% = full.

Table 1: Average oxidation state for SOC of 0%, 50%, 100%:

| SOC / % | 0 | 50 | 100 |
|---|---|---|---|
| (-) Average Oxidation State | $V^{3+}$ | $V^{25+}$ | $V^{2+}$ |
| (+) Average Oxidation State | $V^{4+}$ | $V^{4.5+}$ | $V^{5+}$ |

In redox flow batteries one is therefore not concerned with just one single SOC as with conventional battery but in the SOC of two different electrolytes. One major technical challenge in redox flow batteries is to measure the SOC of each of the battery electrolytes, which is crucial to operating and maximising the capacity and lifetime of the battery. A solution to these technical challenges is therefore of great importance.

**Description of the Invention**

It is the object of the present invention to measure the state of charge (SOC) of each of the battery electrolytes. This object is achieved by a sensor for measuring state of charge of a redox flow battery according to claim 1.

The sensor for indicating state of charge, SOC, of battery electrolytes of a redox flow battery according to the invention comprises a negative battery electrolyte compartment containing negative battery electrolyte; a positive battery electrolyte compartment containing positive battery electrolyte; a reference electrode compartment containing a reference electrolyte, wherein the reference electrolyte is ion-conductively connected to the negative battery electrolyte and the reference electrolyte is ion-conductively connected to the positive battery electrolyte; and a voltage measurement circuit configured to measure a negative SOC potential between the negative battery electrolyte and the reference electrolyte as an indication of the SOC of the negative battery electrolyte and to measure a positive SOC potential between the positive battery electrolyte and the reference electrolyte as an indication of the SOC of the positive battery electrolyte.

According to the invention, the potential of the negative and positive battery electrolyte is measured against a reference electrolyte (which has a predetermined composition and thereby electrochemical potential) by means of an ion-conductive connection. The advantage is that instead of measuring an open circuit voltage (OCV) between the negative and positive battery electrolytes, which is not a reliable measure of the SOC when the electrolyte SOCs are imbalanced, the SOCs are measured against a reference potential provided by the reference electrolyte.

In a development, the reference electrolyte in the reference electrode compartment can be connected to the negative battery electrolyte in the negative battery electrolyte compartment via a first non-porous ion-conductive element and the reference electrolyte in the reference electrode compartment can be connected to the positive battery electrolyte in the positive battery electrolyte compartment via a second non-porous ion-conductive element. This has the advantage that no electrolyte is exchanged and the reference electrolyte can be maintained at a constant composition.

In a further development, the voltage measurement circuit may be further configured to measure a potential between the negative battery electrolyte in the negative battery electrolyte compartment and the positive battery electrolyte in the positive battery electrolyte compartment, in particular to determine an open circuit voltage, OCV, between the negative and the positive battery electrolytes. Thereby, the OCV can be measured directly.

According to another development, the voltage measurement circuit may be further configured to determine an open circuit voltage, OCV, between the negative and the positive battery electrolytes based on the measured negative and positive SOC potentials. Thereby, the separate measurement of the OCV is not necessary.

In another development, the reference electrode compartment may comprises a first reference electrode compartment containing a first reference electrolyte and a second reference electrode compartment containing a second reference electrolyte, the first and second reference electrode compartments being distinct from each other, and the voltage measurement circuit may be configured to measure the negative SOC potential between the negative battery electrolyte in the negative battery electrolyte compartment and the first reference electrolyte in the first reference electrode compartment, and may be configured to measure the positive SOC potential between the positive battery electrolyte in the positive battery electrolyte compartment and the second reference electrolyte in the second reference electrode compartment. This arrangement is flexible regarding the choice of the respective reference electrolyte for the corresponding negative and positive battery electrolytes.

Here, the negative and the positive battery electrolytes may be connected via an ion-conductive membrane or via a third non-porous ion-conductive element. This allows direct measurement of the OCV.

According to a further development, each of the compartments comprises an electrode for sensing the potential of the electrolyte in the respective compartment.

In another development, each reference electrolyte in the respective reference electrode compartments may be static and may have a predetermined composition, in particular each reference electrolyte may a defined volume of battery electrolyte at known SOC. Accordingly, the potential of the reference electrode compartments (reference electrolytes) does not change and is known in advance.

According to another development, one or more of the non-porous ion-conductive elements may comprise a non-porous ion-conductive frit. This is a particularly useful material having the desired properties (non-porous, ion-conductive, electrically insulating). The term frit usually denotes a filter made by the sintering-together of glass particles to produce a piece of known porosity referred to as fritted glass. When saturated with electrolyte these frits are ionically conductive; however, they are also porous and hydraulically interface the reference and sense electrolytes allowing electrolyte ions species to crossover through diffusion and hydraulic action due to temperature and pressure changes. This allows the mixing of reference and battery electrolytes, which results in a drift in the reference electrolyte potential and unreliable measurement of the battery SOC. Alternatively, the direct mixing of reference and battery electrolytes may also result in the formation of non-conducting precipitates within the porous frit that block ionic conduction, leading to a complete failure of the potential measurement. Here, a non-porous ion-conductive frit refers to a frit that conducts ions, like protons, but does not pass through vanadium electrolyte ions, for example through diffusion species or hydraulic action.

In another development, the negative battery electrolyte compartment and the positive battery electrolyte compartment may be flow compartments configured to pass through negative and positive battery electrolyte, respectively, from the redox flow battery, in particular the negative battery electrolyte compartment, the positive battery electrolyte compartment and the reference electrode compartment(s) may form a sensor unit. The negative and positive flow compartments may be configured to pass through the respective electrolytes from the battery tanks. Thereby, fresh negative and positive battery electrolyte is provided the measurement of the SOCs and/or OCV.

In a further development, the reference electrolyte compartments may be flooded (i.e., filled completely with reference electrolyte) and/or gas tight. This has the advantage to avoid oxidation of the reference electrolyte by air.

According to another development, the potentials may be sensed by electrically isolated measurement electronics.

The invention also provides a redox flow battery, in particular an all-vanadium redox flow battery, comprising the sensor according to the invention or any development thereof, as described above.

The invention further provides a method according to claim 12.

The method of determining state of charge, SOC, of battery electrolytes of a redox flow battery having negative and positive battery electrolyte according to the invention comprises the following steps: providing a reference electrode compartment containing a reference electrolyte, wherein the reference electrolyte is ion-conductively connected to the negative battery electrolyte and the reference electrolyte is ion-conductively connected to the positive battery electrolyte; measuring a negative SOC potential between the negative battery electrolyte and the reference electrolyte, and measuring a positive SOC potential between the positive electrolyte and the reference electrolyte; and determining the SOC of the negative battery electrolyte from the measured negative SOC potential and determining the SOC of the positive battery electrolyte from the measured positive SOC potential.

The advantages of the method according to the invention and its developments defined hereinafter correspond to the advantages given above for the battery according to the invention and the respective developments.

The positive SOC potential and the negative SOC potential may be used for detecting an imbalance in SOC, volume and/or concentration of redox species (negative and positive battery electrolyte). In particular, the sensor may monitor the SOC potentials continuously or intermittently based on predetermined conditions, such as predetermined intervals, beginning or ending of a charging process, beginning or ending of a discharging process.

In a development, the method may further comprises: providing a negative battery electrolyte compartment containing negative electrolyte from the redox flow battery; providing a positive battery electrolyte compartment containing positive electrolyte from the redox flow battery; and measuring an open circuit voltage, OCV, between the negative battery electrolyte compartment and the positive battery electrolyte compartment; or determining the OCV between the negative battery electrolyte compartment and the positive battery electrolyte compartment from the negative and positive SOC potentials.

In a further development, the reference electrode compartment may comprise a first reference electrode compartment containing a first reference electrolyte and a second reference electrode compartment containing a second reference electrolyte, the first and second reference electrode compartments being distinct from each other, and the method may further comprise: measuring the negative SOC potential between the negative battery electrolyte and the first reference electrolyte, and the positive SOC potential between the positive battery electrolyte and the second reference electrolyte.

According to another development, the sensor may be used to detect differences in total battery electrolyte (e.g. vanadium) ion concentrations (not just SOC), in other words, determine a change in total battery electrolyte ion concentration in at least one of a positive and negative battery electrolyte tank. A concentration imbalance may be caused by differences in the concentration of battery electrolyte (e.g. vanadium) species in the electrolyte tanks due to diffusion of battery electrolyte (e.g. vanadium) species across the membrane from one electrolyte volume to the other. In particular, a difference in capacity due to an imbalance in the concentration of battery electrolyte (e.g. vanadium electrolyte) in each tank of the battery may be evaluated. In this case, the range in the electrolyte SOC would decrease for the tank with increased concentration of battery electrolyte (e.g. vanadium) species for a given charge/discharge cycle. Contrarily, the SOC range would increase for the tank with decreased concentration of battery electrolyte (e.g. vanadium) species.

In another development, the method may further comprise as an initial step: filling each reference electrode compartment with a respective reference electrolyte having a static, predetermined composition, in particular with a defined volume of battery electrolyte at known SOC.

Further features and exemplary embodiments as well as advantages of the present invention will be explained in greater detail hereinafter by means of the drawings in the following. It is understood that the embodiments do not exhaust the field of the present invention. Some or all of the features described in the following can also be combined with each other in a different way.

**Brief Description of the Drawings**

Fig. 1    shows a conventional OCV cell arrangement.
Fig. 2    shows the OCV cell voltage response vs. battery electrolyte state of charge when balanced.
Fig. 3    shows measured OCV vs positive elctrolyte SOC for a scenario where the battery is perfectly balanced (0%), and imbalanced at 10%, 20%, and 30%.
Fig. 4    shows and OCV cell combined with two reference electrodes.
Fig. 5    shows measured potential response of the OCV cell (A), positive (B) and negative (C) sense electrodes using reference electrolytes at know SOC.
Fig. 6    shows an OCV cell combined with two reference electrodes.
Fig. 7    shows an OCV cell separate from two oxidation reduction probes (combined sense and reference electrode).

Fig. 8        shows a flow cell using a single reference electrode compartment.
Fig. 9        shows a measured potential response of the positive (A) and negative (B) sense electrodes vs. $V^{3.5}$ reference electrolyte.
Fig. 10      illustrates how the sensor may be positioned in the system as part of the hydraulic.
Fig. 11      shows an SOC cell front (A) and back (B).
Fig. 12      shows an exploded technical drawing of a specific implementation.

**Embodiments**

The invention is described in detail for the following embodiments with respect to the accompanying figures.

Problem Description

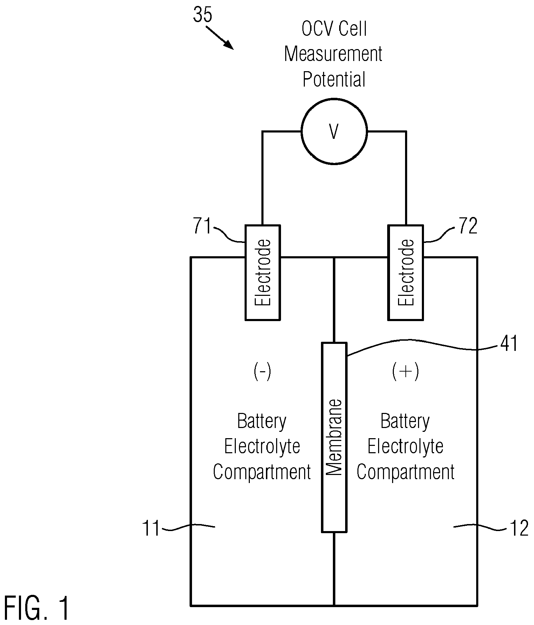

A conventional method to evaluate the SOC of a flow battery is to measure the open circuit voltage (OCV) between the electrolytes, using for example a single OCV flow cell - this is often referred to as an "OCV Cell", as depicted in figure 1.

Figure 1 shows a Conventional OCV Cell Arrangement. The potential of the battery electrolyte in each compartment is sensed by an electrode. The potential difference between electrodes is measured using a voltage measurement circuit. An ionically conductive membrane is necessary to complete the measurement circuit.

An OCV cell typically possesses two flow compartments - each containing different battery electrolytes that are separated by an ionically conductive membrane. Each compartment possesses a conductive electrode to sense the electrolyte potential. The ionically conductive membrane allows a voltage measurement circuit to measure the potential difference between the electrolytes in each compartment. By flowing each battery electrolyte through the OCV cell during battery charge/discharge to constantly refresh the electrolytes, the potential difference between the electrolytes can be monitored in real-time.

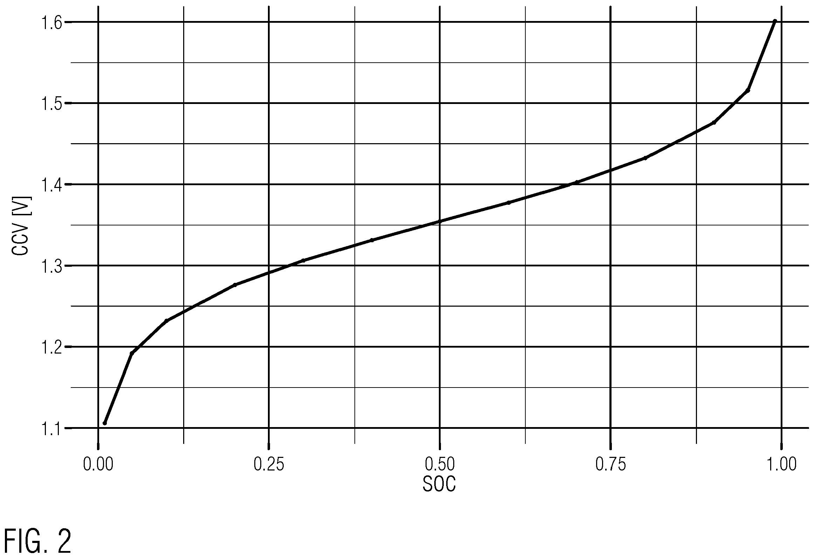

The OCV cell voltage response to the state of charge of the battery electrolytes in the case where the electrolytes are balanced is shown in figure 2. Figure 2 shows the OCV cell voltage response vs. battery electrolyte state of charge when balanced.

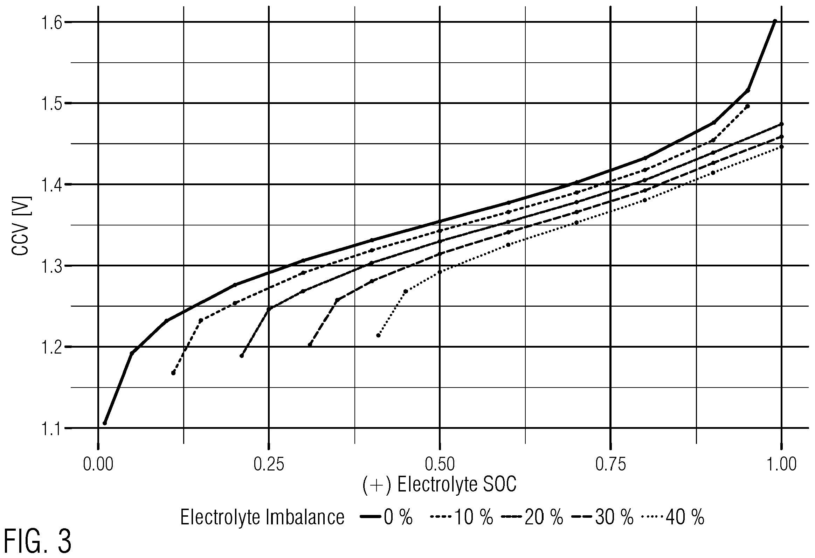

If calibrated, this can provide a precise assessment of the SOC of the electrolyte; however, it is only accurate where the SOCs of the electrolytes are the same i.e. the SOCs are "balanced". In practice, several scenarios can lead to a difference in each electrolyte SOC - known as "imbalance" - which leads to a lower measured OCV potential, and therefore, in inaccurate measurement of SOC. An example of the change in OCV cell voltage response for different imbalanced states is shown in figure 3.

Figure 3 shows the measured OCV vs average SOC in a scenario where the battery is perfectly balanced (0%), and imbalanced at 10%, 20%, and 30%. Where the battery becomes imbalanced the OCV cell potential is no longer reliable indicator of the state of charge of each electrolyte.

Here it can be seen that where the electrolyte SOCs are imbalanced the measured OCV voltage is no longer a reliable measure of the SOC when compared to the balanced state. The consequence of imbalance is firstly inaccurate indication of the SOC, secondly reduced capacity, and thirdly irreversible damage to the flow battery.

During normal operation of the battery, a small quantity of side reaction occurs during the charge period of the flow battery that leads to an imbalance in the SOC of each electrolyte over time i.e., a difference in the amount of energy stored chemically per tank.

This typically occurs due to the generation of a small amount of hydrogen at the positive electrode side:
Positive electrode side reaction: $2H^+ + 2e^- \rightarrow H_2$

This imbalance in electrolyte charge state leads to an error in the SOC determined by the OCV cell - the SOC determined is lower than the SOC of the imbalanced tank:

$$SOC\ (-\ Tank) < SOC\ (+\ Tank)$$

If the imbalance is not detected, it is possible to overcharge the positive electrolyte tank, causing irreversible degradation of the battery bipolar plates, according to following side-reactions:

Positive electrode side reaction 1: $C + 2H_2O \rightarrow CO_2 + 4H^+ + 4e^-$
Positive electrode side reaction 2: $2H_2O \rightarrow O_2 + 4H^+ + 4e^-$

The electrolytes may have also become imbalanced due to several other scenarios. Firstly, an imbalance may be caused by reaction of the negative tank electrolyte with oxygen in air (effectively discharging the electrolyte in the tank). This also leads to the following scenario:

$$SOC\ (-\ Tank) < SOC\ (+\ Tank)$$

Alternatively, a concentration imbalance may be caused by significant differences in the concentration of vanadium species in the electrolyte tanks due to preferential diffusion of vanadium species across the membrane from electrolyte volume to the other.

$$Capacity\ (-\ Tank) > Capacity\ (+\ Tank)\ (or\ vice\ versa)$$

In a concentration imbalance scenario, the imbalance in the SOC between electrolytes is not constant and changes during the charge/discharge. For example, when empty or full the positive electrolyte SOC may register 0% and 100% SOC, whereas the negative tank 20% and 80% SOC, respectively.

Clearly, there is a distinct technical need to measure not only the difference in the states of charge of the battery electrolytes, but also their relative coulombic capacity i.e. their absolute concentrations of redox active species. By doing so one is able to take mitigative actions to rebalance the electrolytes SOC and/or absolute concentration of redox active species.

Solution

A solution to the previously described problem is to combine one or more reference electrode compartments with an OCV measurement flow cell that is interfaced via a non-porous ionically conductive interface. The reference electrode compartments contain electrolyte with known composition, which can be - but is not limited to - a volume of battery electrolyte at known SOC. These may be implemented in several different embodiments as described hereinafter.

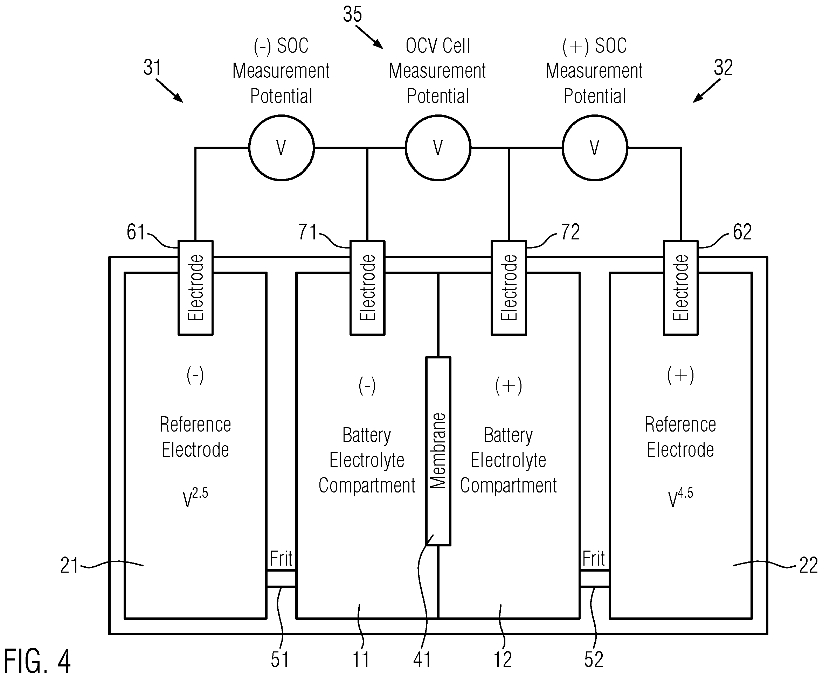

Figure 4 shows a sensor according to the present disclosure where an OCV cell is combined with two reference electrode compartments 21, 22. The reference electrode compartments 21, 22 are interfaced to the electrolyte in the battery electrolyte compartments 11, 12 via non-porous ionically conductive frits 51, 52. The OCV cell uses a conventional ionically conductive membrane 41 to separate battery electrolytes and allow the electrolyte potentials to be measured.

Specifically, the sensor for indicating state of charge, SOC, of battery electrolytes of a redox flow battery according to the invention comprises a negative battery electrolyte compartment 11 containing negative battery electrolyte; a positive battery electrolyte compartment 12 containing positive battery electrolyte; a reference electrode compartment 21, 22 containing a reference electrolyte, wherein the reference electrolyte is ion-conductively connected to the negative battery electrolyte and the reference electrolyte is ion-conductively connected to the positive battery electrolyte; and a voltage measurement circuit 31, 32 configured to measure a negative SOC potential between the negative battery electrolyte and the reference electrolyte as an indication of the SOC of the negative battery electrolyte and to measure a positive SOC potential between the positive battery electrolyte and the reference electrolyte as an indication of the SOC of the positive battery electrolyte.

The voltage measurement circuit 31, 32, 35 is shown to be further configured to measure a potential between the negative battery electrolyte in the negative battery electrolyte compartment 11 and the positive battery electrolyte in the positive battery electrolyte compartment 12, in order to determine an open circuit voltage, OCV, between the negative and the positive battery electrolytes. Thereby, the OCV can be measured directly.

Alternatively, the voltage measurement circuit 31, 32 may be configured to determine an open circuit voltage, OCV, between the negative and the positive battery electrolytes based on the measured negative and positive SOC potentials. Thereby, the separate measurement of the OCV is not necessary.

The reference electrolyte in the reference electrode compartment 21, 22 is connected to the negative battery electrolyte in the negative battery electrolyte compartment 11 via a first non-porous ion-conductive element 51 and the reference electrolyte in the reference electrode compartment 21, 22 is connected to the positive battery electrolyte in the positive battery electrolyte compartment 12 via a second non-porous ion-conductive element 52.

The reference electrode compartment comprises a first reference electrode compartment 21 containing a first reference electrolyte and a second reference electrode compartment 22 containing a second reference electrolyte, the first and second reference electrode compartments 21, 22 being distinct from each other, and the voltage measurement circuit 31, 32 is configured to measure the negative SOC potential between the negative battery electrolyte in the negative battery electrolyte compartment and the first reference electrolyte in the first reference electrode compartment, and is be configured to measure the positive SOC potential between the positive battery electrolyte in the positive battery electrolyte compartment and the second reference electrolyte in the second reference electrode compartment.

Accordingly, in this embodiment, there are four compartments: two battery electrolyte compartments 11, 12 (in particular two flow battery electrolyte compartments 11, 12 through which the respective battery electrolytes flow) that are interfaced by an ionically conductive membrane 41, and two different reference electrode compartments 21, 22 containing static electrolytes that are respectively interfaced via a non-porous ionically conductive frit 51, 52. Each of the four compartments possesses an electrode 71, 72, 61, 62 to sense the potential of the electrolyte in each compartment. The ionically conductive membrane 41 allows the electrolyte potential to be measured between flow battery compartments 11, 12, as in a conventional OCV cell. The non-porous ionically conductive frits 51, 52, meanwhile, allow the potentials to be measured between the reference electrolytes and the flow battery electrolytes.

Each of the compartments (battery electrolyte compartments 11, 12; reference electrode compartments 21, 22) comprises an electrode for sensing the potential of the electrolyte in the respective compartment. The electrodes comprise a conductive material that is stable in the battery and reference electrolytes, which does not react with oxygen, is non-porous and forms a sealing of the respective compartments. Suitable materials include - but are not limited to - graphite foils, impregnated graphite foils, impregnated graphite plate, compression or injection molded carbon composite plates, or extruded carbon composite plates.

The non-porous ionically conductive frit primarily comprises a polymeric support containing one or more finely dispersed powdered salt(s), whereby the weight percentage of salt(s) in polymeric support lies between 35% and 55%. The polymeric support is chosen to be chemically resistant to the battery electrolyte that is moreover a good electrical insulator. Suitable types of polymeric support include - but are not limited to - epoxy resins, vinyl ester resins, polyethylene, polypropylene or polyvinyl chloride. Suitable dispersed powdered salt(s) meanwhile include - but are not limited to - the lithium, potassium, sodium or silver salts of chloride, nitrate & sulphate. The choice of polymeric support & salt(s) may be tuned for compatibility with the battery electrolyte. The finely dispersed powered salts provide the desired ionic conductivity through the solid polymeric support without the passing of the battery electric-active species i.e. vanadium.

Depending on the choice of polymer, the polymeric support and finally dispersed salt(s) mixture may be cured using conventional methods, such as thermal, UV light, time or with combination of a polymerisation initiator and/or accelerator. The mechanical properties may also be improved using filler material, such as quartz or glass powder. Finally, air releasing agents may be also used to avoid the formation of air bubbles during the curing process.

The ionically conductive non-porous frit formulation, cross-sectional area, length and width are ideally tuned to provide an ionic resistance of less than 30 k$\Omega$, preferably in the range of 1 to 20 k$\Omega$.

The ionically conductive non-porous frit may be cured in a removable mold and later inserted into the sensor body frame to form a seal with the frame to hydraulically separate reference and battery electrolytes. Alternatively, the ionically conductive frit may be cured within a cavity of the sensor frame, forming a seal with the frame to hydraulically separate reference and battery electrolytes. The sealing between frit and sensor frame may be achieved mechanically, chemically, or through use of a bonding agent.

Alternatively, the ionically conductive frit may be cured within the cavity of a pipe section, whereby that the pipe section is partially or completely filled with ionically conductive material, such that a hydraulic seal is formed between the inner-wall of the pipe section and the cured frit polymeric support. This seal may be achieved mechanically or through bonding between pipe material and the polymeric support of the non-porous ionically conductive frit. Suitable pipe materials include - but are not limited to - polyethylene, polypropylene, polyvinyl chloride or polyether ether ketone. The pipe containing ionically conductive frit may then be inserted into or bonded with the sensor body frame forming a seal with the pipe outer wall to hydraulically separate reference and battery electrolytes.

Preferably the non-porous ionically conductive frit is cylindrical in form, with a diameter of between 1 and 6 mm, and with length between 3 and 10 mm.

The properties of the electrodes (the types of materials used as electrodes) and the frit (the properties of the ionically conductive frit, e.g. the ionic conductivity or resistivity; dimensions of the frit, e.g. diameter, length) as described above may apply to the general invention and the developments as described above in the section "Description of the Invention" as well as to each of the specific embodiments described here in the section "Embodiments" with reference to the figures.

The reference electrolytes used in this case are negative and positive electrolyte at a known SOC - here 50% SOC, for example - which are used as reference for the negative and positive battery electrolyte respectively.

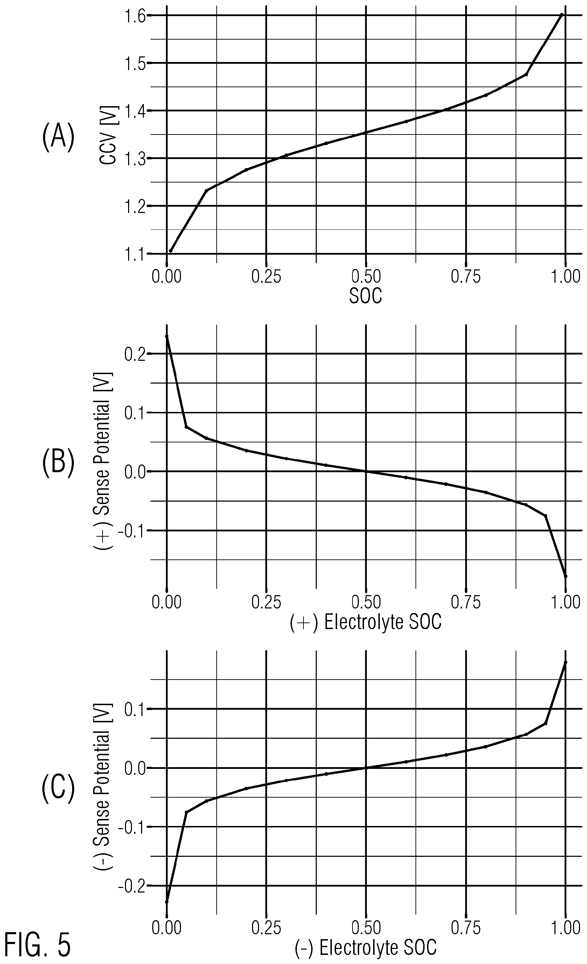

The voltage responses (vertical, in Volts) of the OCV Cell, along with the negative and positive SOC sense electrodes to the change in electrolyte state of charge (horizontal) are given in figure 5. Specifically, figure 5 shows measured potential response of the OCV cell (A), positive (B) and negative (C) sense electrodes using reference electrolytes at know SOC i.e., for example 50% SOC, $V^{4.5}$ and $V^{2.5}$.

The SOC of each electrolyte can be determined by the following simple equations:

For the positive electrolyte:

$$SOC\,(+) = 1 - \frac{1}{1 + e^{\frac{xnF}{RT}}}$$

For the negative electrolyte:

$$SOC\,(-) = \frac{1}{1 + e^{\frac{xnF}{RT}}}$$

Where:

number of electrons ($n$) = 1
Faraday constant ($F$) = 96,485 $C$ / $mol$
Gas constant ($R$) = 8.315 $J$ / $mol\ K$
Temperate($T$) = 298 $K$
$x$ = measured SoC probe potential (in Volts)

Note that because the range of the two voltages sensed are identical - just inverted - the voltage measurement circuits can be identical. This method converts a measured battery voltage to SOC by using the above known relation between voltage and SOC.

In addition to the aforementioned relations, which are generally sufficiently accurate enough given the accuracy of measurement electronics, in certain circumstances the accuracy in the relationship between measured potential and voltage may be improved upon by either taking into account the activity of the electroactive species, adjusting the gain and offset of the measurement electronics accordingly to provide a closer fit, or fitting a pre-calibrated relationship between SOC, measured potential and temperature using an alternative engineering equation.

Furthermore, the flow battery control system may also take into account the influence of measurement potential measurement accuracy (typically within 5 to 10 mV) on the accuracy of the SOC determined for different SOC range. For example, at 50% SOC a measurement offset of 10 mV leads to an error of -10% in the SOC determination, whereas to 10% SOC the same 10 mV offset leads to an error of only -2.5% in the SOC determination.

This approach not only allows to indicate each battery electrolyte potential in real time but to also evaluate if there is a difference in capacity due to an imbalance in the concentration of vanadium electrolyte in each tank of the battery. In this case, the range in the electrolyte SOC would decrease for the tank with decreased concentration of vanadium species.

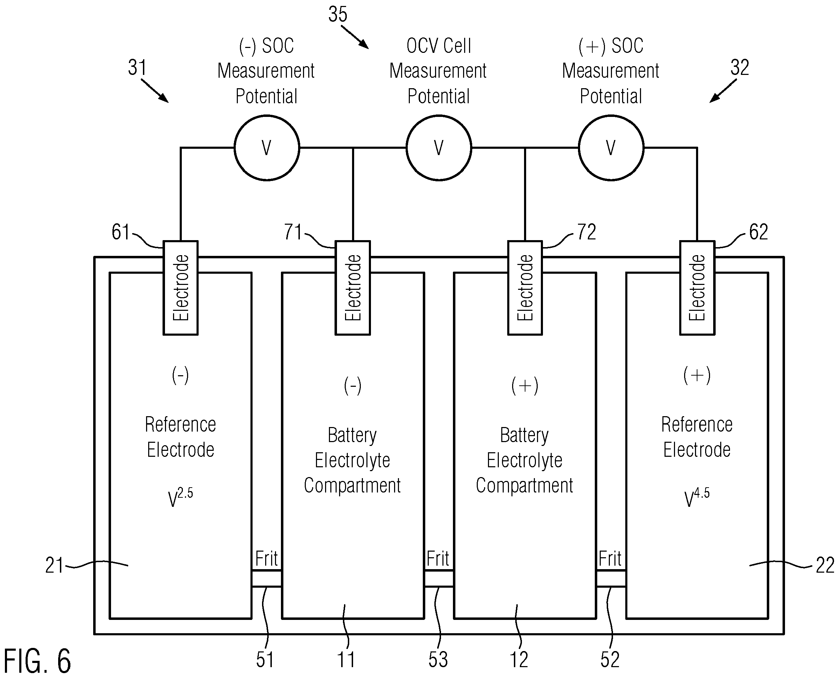

Figure 6 shows another embodiment of an OCV cell combined with two reference electrodes 21, 22. The battery electrolyte compartments (flow cells) 11, 12 and the reference electrode compartments 21, 22 are again interfaced via a non-porous ionically conductive frit 51, 52.

Further, in this embodiment the conventional membrane 41 between the OCV cell compartments 11, 12 of figure 4 is replaced by a non-porous ionically conductive frit 53. This has the advantage of eliminating the self-discharge that occurs due to membrane crossover of redox active species that leads to discharge of the cell, where the battery electrolyte is not replenished. Avoiding this self-discharge offers the advantage that during powering on of the system, the OCV instantly provides a measure of the SOC, avoiding the finite time that would be required to replenish the battery electrolyte in the case of a conventional OCV cell and membrane.

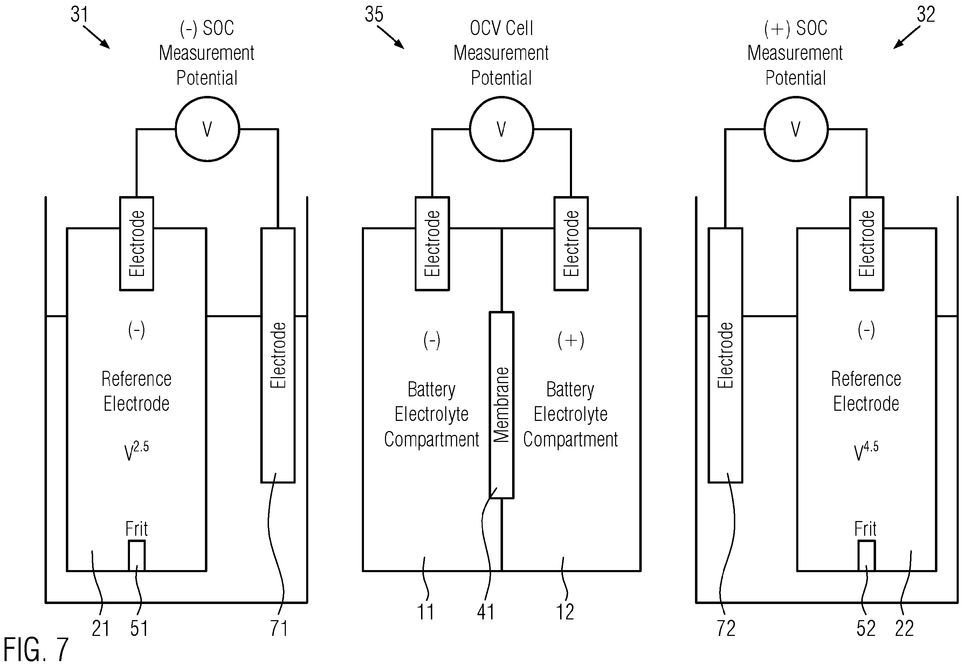

In a further embodiment as shown in figure 7, a conventional OCV cell may be combined with separate SOC probes located in each battery electrolyte tank.

Specifically, figure 7 shows an OCV cell separate from two oxidation reduction probes (combined sense electrodes 71, 72 and reference electrodes 21, 22). The reference electrodes 21, 22 are interfaced to the electrolyte in the tank via a non-porous ionically conductive frit 51, 52. In this embodiment the OCV cell is optional.

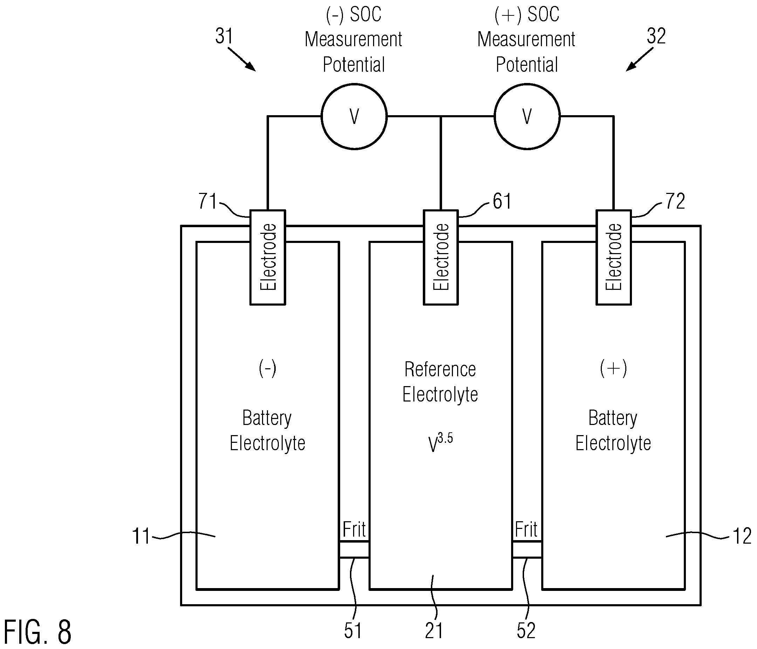

Figure 8 shows still another embodiment of the sensor according to the invention having a single reference electrode compartment 21. In this embodiment the individual battery electrolyte states of charge can be measured directly using a single reference electrode; in this embodiment no OCV cell is necessary.

In this embodiment, the design is simplified and the number of reference electrolytes necessary to measure the SOCs is reduced from two (in all previous embodiments) to one. The non-porous ionically conductive frits 51, 52 allow a reference electrolyte that is distinctly different from the battery electrolyte to be used, without drifting of the electrolyte potential. In this case, for example a 50% mixture of $V^{3+}$/$V^{4+}$ (also denoted as $V^{3.5}$) as reference electrolyte can be used.

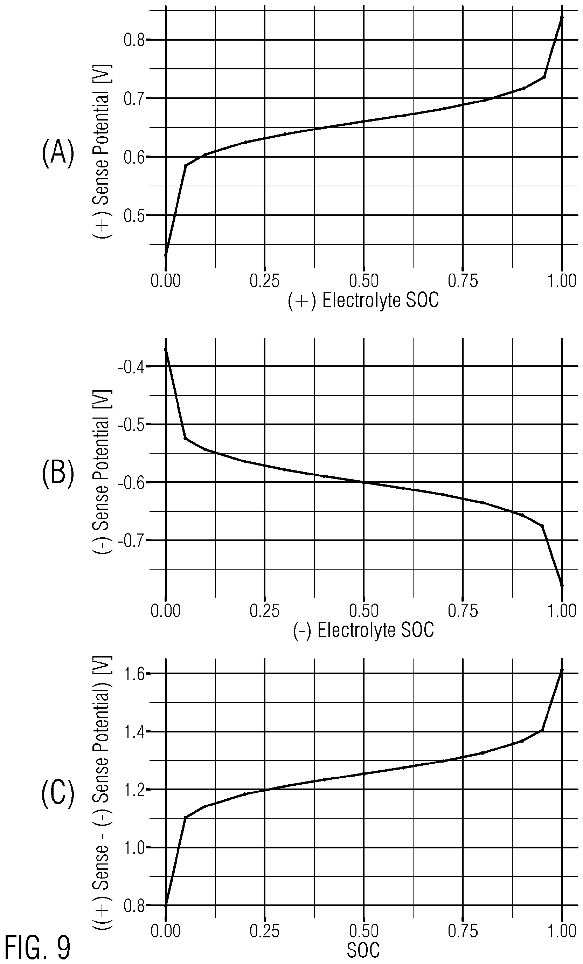

The corresponding measured potentials (in Volts) vs the SOC of each battery electrolyte are presented in figure 9.

Specifically, figure 9 shows a measured potential response of the positive (A) and negative (B) sense electrodes vs. $V^{3.5}$ reference electrolyte. The OCV can be determined by combining the measured voltages (C).

The potential difference between the battery electrolytes (OCV) can be deduced by adding the (absolute) positive and negative sense electrode potentials. Alternatively, the potential difference between the positive and negative battery electrolytes can be measured directly, whereby the two ionically conductive non-porous frits and reference electrolyte provide the ionically conductive path for the measurement circuit.

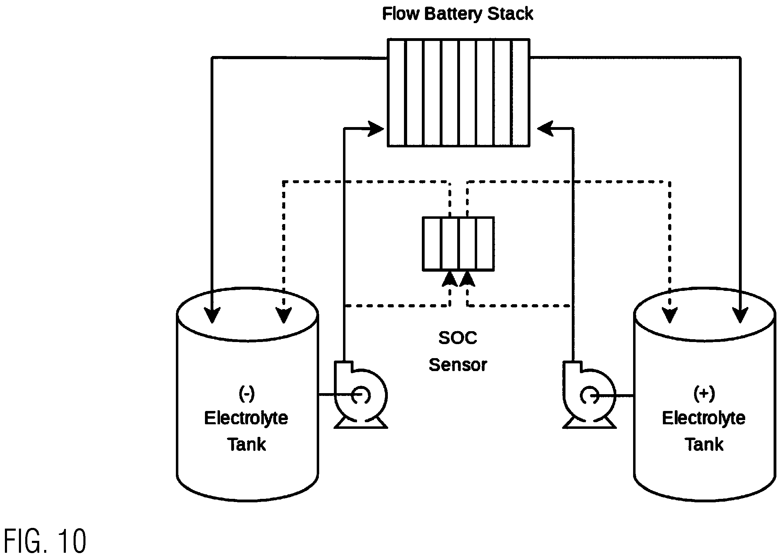

Figure 10 illustrates how the sensor may be positioned in the system as part of the hydraulic.

The SOC sensor is incorporated into the flow battery hydraulic, whereby a small fraction of the electrolyte in each hydraulic loop that flows from each pump to the flow battery stack inlet is diverted/bled through the SOC sensor cell in a parallel hydraulic loop.

The diverted flow is achieved at a desired rate by tuning the pressure drop across the SOC sensor hydraulic for the nominal hydraulic pumping pressure, either via a valve, by design of the SOC sensor cell compartments or by the length and cross-sectional area of the hydraulic. The preferred range of flow rates through the SOC sensor is in the range of 10 to 150 ml per minute.

The return of the SOC sensor loop may feed into the battery stack return hydraulic, or alternatively directly into the tanks (as shown in figure 10).

The SOC sensor may be positioned at a level such that the hydraulic level of the sensor is positioned at the hydraulic level of the stack. By doing so, the SOC sensor is also able to detect failure mode caused by a hydraulic air leak that leads to the draining of battery electrolyte from one or more half-cells of the battery stack, during periods where there is no hydraulic pumping. In such cases the SOC cell drains and the ionic connection between reference and sense compartments is lost due to the draining of battery electrolyte from the SOC sense compartments. The loss of ionic conductivity results in the sensing of a floating potential that can be used to trigger an error state and prevent damage to the battery stack that would otherwise occur when potential is applied to the battery stack but the half-cells of the stack are not completely filled with electrolyte.

The sensor can be adapted for use with other flow battery chemistries (other than Vanadium) by tuning the sense electrode material and reference electrolyte compositions (in a similar fashion using a known SOC) and the polymeric support and finely dispersed salt(s) used to form the non-porous ionically-conductive frit.

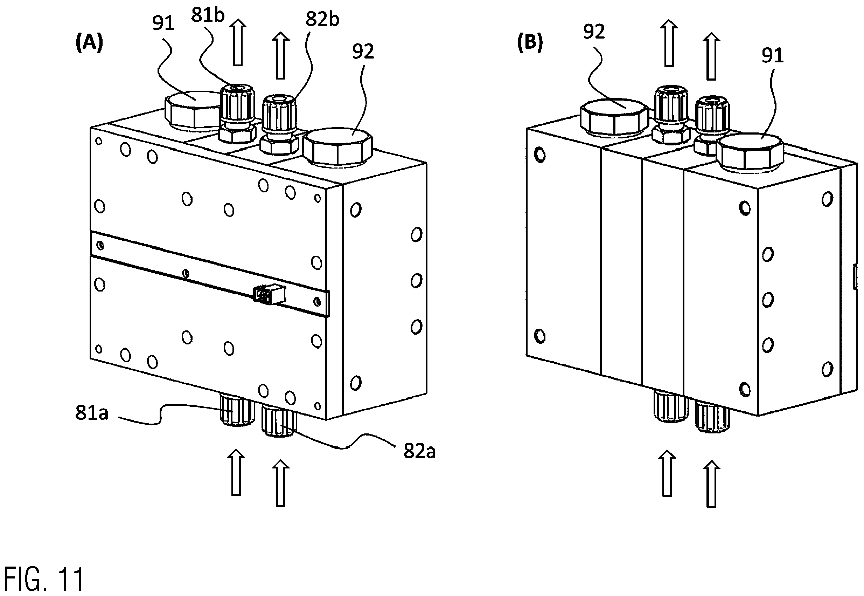

Figure 11 shows an implementation of a sensor (SOC cell) in front view (A) and back view (B).

In this implementation, the inlet ports 81a, 82a and outlet ports 81b, 82b for the negative and positive battery electrolyte, respectively, can be seen where the battery electrolyte is flowed through the OCV cell as indicated by the arrows. At the top one can see the filling ports 91, 92 for the static reference electrolyte volume in the negative and positive reference electrolyte compartments, respectively.

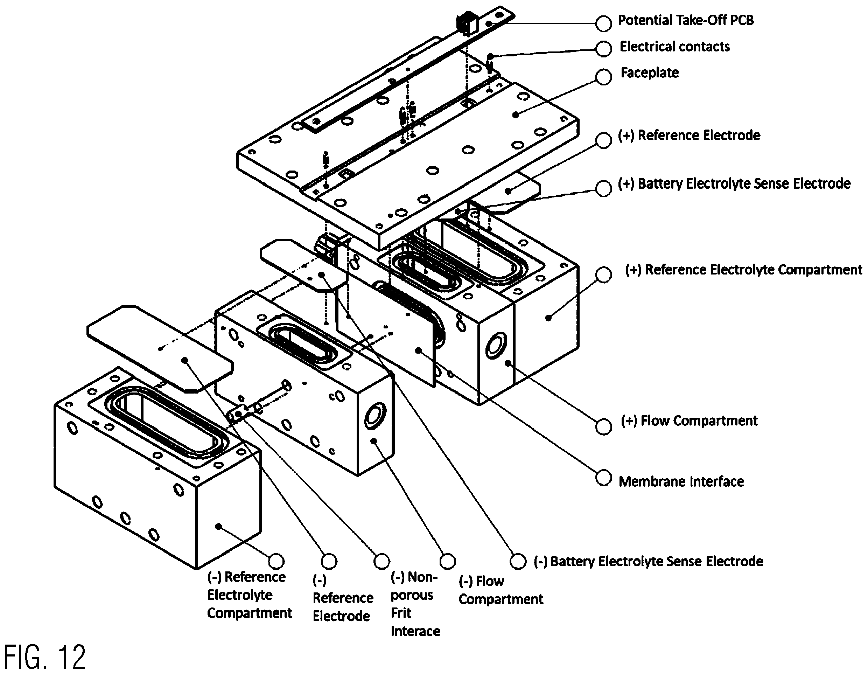

Figure 12 shows an exploded technical drawing of this implementation.

Here, each compartment is covered and sealed by a planar electrode (in total 4 planar electrodes are used: 2 reference electrodes for reference electrolyte compartments and 2 sense electrodes for flow compartments). These planar electrodes are used to sense the electrochemical potentials of the electrolyte in the different compartments. The reference electrolyte compartments are entirely filled with a respective reference electrolyte (such as $V^{3.5}$, for example), so that the reference electrodes are in contact with the reference electrolyte. Each reference electrolyte compartment when covered by the respective reference electrode may also be air-tight so as to avoid contact of the reference electrolyte with air. The negative and positive flow compartments (battery electrolyte compartments) each have an inlet and an outlet so as to flow respective negative and positive battery electrolyte through it. The corresponding sense elctrodes are in contact with the respective battery electrolyte. In addition, the two flow compartments are interfaced with a membrane. Further, each flow compartment is interfaced to a respective reference electrode compartment via a non-porous ion-conductive frit. The inlet of the negative battery electrolyte flow compartment is connected via a hydraulic line to the negative battery tank. A pump may be provided to pump the negative battery electrolyte from the negative battery tank to the inlet of the negative battery electrolyte flow compartment. The outlet of the negative battery electrolyte flow compartment is hydraulically connected to a return line that returns the negative battery electrolyte that has passed through the negative battery electrolyte flow compartment to the negative battery tank. Similarly, the inlet of the positive battery electrolyte flow compartment is connected via a hydraulic line to the positive battery tank. A pump may be provided to pump the positive battery electrolyte from the positive battery tank to the inlet of the positive battery electrolyte flow compartment. The outlet of the positive battery electrolyte flow compartment is hydraulically connected to a return line that returns the positive battery electrolyte that has passed through the positive battery electrolyte flow compartment to the positive battery tank.

A single potential take-off PCB with defined probe locations connects the 4 electrodes and provides the measurement circuit with a defined cable connector interface.

The sensor of this implementation is held together by fasteners as a single assembly unit with 2 fluid inlets, 2 fluid outlets and 1 electrical connector. The unit provides mounting point to be integrated into the flow battery system.

Summary of Key Points

A flow battery consists of two electrolytes, each with their own state of charge (SOC). A conventional approach to indicate SOC is to use an OCV cell that senses the potential difference between flow battery electrolytes; however, this approach is not sufficiently accurate to measure the SOC of the battery because each electrolyte has a separate SOC that may be different. This is typically referred to as imbalance and can be caused by a difference in SOC, volume and/or concentration of the electrolytes. Imbalance can create a scenario where the SOC determined by the OCV cell is erroneous and the capacity of the battery is reduced. In severe cases the flow battery may also be irreversibly damaged.

The present approach may combine one or more reference electrolytes with an OCV cell to measure the potential of each battery electrolyte independently. This is achieved by interfacing the reference electrolytes with the battery electrolytes via a non-porous ionically conductive frit that prevents mixing of the electrolytes. Conventional approaches to interface a reference electrolyte with the battery cell electrolyte is to use either a ceramic microporous frit or alternatively a hydraulic capillary. While allowing an ionically conductive pathway, both of these approaches have two distinct disadvantages: (i) diffusion or hydraulic action between the reference electrolyte volume and battery electrolyte volumes lead to the mixing of electrolytes and consequent drift of the reference electrode potential, and (ii) the reference electrolyte must be of similar composition to the battery electrolyte in order minimise this drift.

The present solution combining two reference electrolytes with an OCV cell and implementing the non-porous ionically conductive frit to interface between reference electrode and battery electrolyte has the following advantages over the incumbent prior solutions:

> i) Use of two reference electrodes allows the SOC of each battery electrolyte to be measured independently.
> ii) Use of two reference electrodes allows the capacity of each electrolyte to be determined independently (by taking the range of SOC when the battery is empty / full).
> iii) Use of two reference electrodes combined with OCV cell offers measurement redundancy should a single reference electrode fail i.e. the SOC of each electrolyte can be deduced from the SOC of one electrolyte and the OCV.
> iv) Detection of imbalance in the SOC between the battery electrolytes allows corrective actions to restore battery capacity e.g. rebalancing SOC, mixing positive and negative battery electrolytes.
> v) Use of non-porous ionic bridge eliminates need to compensate for changes in the reference electrolyte composition over time i.e. reference potential is stable because there is no mixing between the battery and reference electrolytes.
> vi) Use of non-porous ionic bridge allows use of reference electrolyte that is of dissimilar chemical composition i.e. one is not limited to reference vanadium electrolytes given in the example embodiments, and one can use, for example, saturated Ag/AgCl reference electrolyte.
> vii) Use of a non-porous ionic bridge allows a single reference electrode to measure the state of charge of both negative and positive tanks (see embodiment in figure 8).
> viii) Use of a non-porous ionic bridge for battery OCV measurement eliminates electrolyte crossover and self-discharge of battery electrolyte through the membrane. During operation this has little influence; however, where the battery is inactive for several hours the OCV compartments will self-discharge and SOCs determined will not be reliable until the battery electrolyte volumes are refreshed.
> ix) When incorporating the non-porous ionically conductive frit as ionic bridge (as opposed to membrane) in the OCV cell, the OCV cell has the secondary function of detecting draining of the hydraulic line; where the potential measurement becomes erratic or floating. The individual electrolyte measurements may also be used to detect which electrolyte has drained.

The embodiments are only exemplary and the full scope of the present invention is defined by the claims.

**Claims**

**1.** Sensor for indicating state of charge, SOC, of battery electrolytes of a redox flow battery, comprising:

> a negative battery electrolyte compartment containing negative battery electrolyte;
> a positive battery electrolyte compartment containing positive battery electrolyte;
> a reference electrode compartment containing a reference electrolyte, wherein the reference electrolyte is ion-conductively connected to the negative battery electrolyte and the reference electrolyte is ion-conductively connected to the positive battery electrolyte; and
> a voltage measurement circuit configured to measure a negative SOC potential between the negative battery electrolyte and the reference electrolyte and a positive SOC potential between the positive battery electrolyte and the reference electrolyte.

2. The sensor according to claim 1, wherein the reference electrolyte in the reference electrode compartment is connected to the negative battery electrolyte in the negative battery electrolyte compartment via a first non-porous ion-conductive element and the reference electrolyte in the reference electrode compartment is connected to the positive battery electrolyte in the positive battery electrolyte compartment via a second non-porous ion-conductive element.

3. The sensor according to claim 1 or 2, wherein the voltage measurement circuit is further configured to measure a potential between the negative battery electrolyte in the negative battery electrolyte compartment and the positive battery electrolyte in the positive battery electrolyte compartment, in particular to determine an open circuit voltage, OCV, between the negative and the positive battery electrolytes.

4. The sensor according to claim 1 or 2, wherein the voltage measurement circuit is further configured to determine an open circuit voltage, OCV, between the negative and the positive battery electrolytes based on the measured negative and positive SOC potentials.

5. The sensor according to any one of claims 1 to 4, wherein the reference electrode compartment comprises a first reference electrode compartment containing a first reference electrolyte and a second reference electrode compartment containing a second reference electrolyte, the first and second reference electrode compartments being distinct from each other, and wherein the voltage measurement circuit is configured to measure the negative SOC potential between the negative battery electrolyte in the negative battery electrolyte compartment and the first reference electrolyte in the first reference electrode compartment, and configured to measure the positive SOC potential between the positive battery electrolyte in the positive battery electrolyte compartment and the second reference electrolyte in the second reference electrode compartment.

6. The sensor according to claim 5, wherein the negative and the positive battery electrolytes are connected via an ion-conductive membrane or via a third non-porous ion-conductive element.

7. The sensor according to any one of claims 1 to 6, wherein each of the compartments comprises an electrode for sensing the potential of the electrolyte in the respective compartment; wherein, optionally, each electrode has one or more of the following properties:

    (i) comprises a conductive material that is stable in the respective electrolyte;
    (ii) is non-porous and forms a sealing of the respective compartment;
    (iii) includes a graphite foil, an impregnated graphite foil, an impregnated graphite plate, a compression or injection molded carbon composite plate, or an extruded carbon composite plate.

8. The sensor according to any one of claims 1 to 7, wherein each reference electrolyte in the respective reference electrode compartments is static and has a predetermined composition, in particular each reference electrolyte is a defined volume of battery electrolyte at known SOC; and/or wherein each reference electrolyte compartment is filled completely with reference electrolyte.

9. The sensor according to any one of claims 2 to 8, wherein one or more of the non-porous ion-conductive elements comprise a non-porous ion-conductive frit, wherein, optionally, the non-porous ion-conductive frit has one or more of the following properties:

    (i) comprises a polymeric support containing one or more finely dispersed powdered salt(s);
    (ii) has an ionic resistance of less than 30 k$\Omega$, preferably in the range of 1 to 20 k$\Omega$;
    (iii) is cylindrical in form, with a diameter of between 1 and 6 mm, with length between 3 and 10 mm.

10. The sensor according to any one of claims 1 to 9, wherein the negative battery electrolyte compartment and the positive battery electrolyte compartment are flow compartments configured to pass through negative and positive battery electrolyte, respectively, from the redox flow battery, in particular wherein the negative battery electrolyte compartment, the positive battery electrolyte compartment and the reference electrode compartment(s) form a sensor unit.

11. A redox flow battery, in particular an all-vanadium redox flow battery, comprising the sensor according to any one of claims 1 to 10; in particular, wherein the sensor is incorporated into a flow battery hydraulic, whereby a small fraction of the battery electrolyte in each hydraulic loop that flows to a flow battery stack inlet is diverted through the respective battery electrolyte compartment in a respective parallel hydraulic loop.

**12.** A method of determining state of charge, SOC, of battery electrolytes of a redox flow battery having negative and positive battery electrolyte, comprising:

providing a reference electrode compartment containing a reference electrolyte, wherein the reference electrolyte is ion-conductively connected to the negative battery electrolyte and the reference electrolyte is ion-conductively connected to the positive battery electrolyte;
measuring a negative SOC potential between the negative battery electrolyte and the reference electrolyte, and measuring a positive SOC potential between the positive electrolyte and the reference electrolyte; and
determining the SOC of the negative battery electrolyte from the measured negative SOC potential and determining the SOC of the positive battery electrolyte from the measured positive SOC potential;
wherein, optionally, the measuring and determining steps are performed continuously or intermittently.

**13.** The method according to claim 12, further comprising:

providing a negative battery electrolyte compartment containing negative electrolyte from the redox flow battery;
providing a positive battery electrolyte compartment containing positive electrolyte from the redox flow battery; and
measuring an open circuit voltage, OCV, between the negative battery electrolyte compartment and the positive battery electrolyte compartment; or
determining the OCV between the negative battery electrolyte compartment and the positive battery electrolyte compartment from the negative and positive SOC potentials; and/or
determining a change in total battery electrolyte ion concentration in at least one of a positive and negative battery electrolyte tank.

**14.** The method according to claim 12 or 13, wherein the reference electrode compartment comprises a first reference electrode compartment containing a first reference electrolyte and a second reference electrode compartment containing a second reference electrolyte, the first and second reference electrode compartments being distinct from each other, the method further comprising:
measuring the negative SOC potential between the negative battery electrolyte and the first reference electrolyte, and the positive SOC potential between the positive battery electrolyte and the second reference electrolyte.

**15.** The method according to any one of claims 12 to 14, further comprising as an initial step:
filling each reference electrode compartment with a respective reference electrolyte having a static, predetermined composition, in particular with a defined volume of battery electrolyte at known SOC.

FIG. 1

FIG. 2

FIG. 3

FIG. 4

FIG. 5

FIG. 6

EP 4 407 721 A1

FIG. 7

EP 4 407 721 A1

FIG. 8

EP 4 407 721 A1

FIG. 9

**Flow Battery Stack**

SOC
Sensor

(-)
Electrolyte
Tank

(+)
Electrolyte
Tank

FIG. 10

FIG. 11

FIG. 12

Europäisches
Patentamt

European
Patent Office

Office européen
des brevets

# EUROPEAN SEARCH REPORT

**Application Number**

EP 23 15 3090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/285709 A1 (KLASSEN ANDREW [CA] ET AL) 8 September 2022 (2022-09-08) * paragraph [0035] – paragraph [0033]; claims 1-18 * ----- | 1-4,7,8, 10-13 | INV. H01M8/0444 H01M8/04537 H01M8/18 |
| X | KR 2019 0085370 A (KOREA INST ENERGY RES [KR]) 18 July 2019 (2019-07-18) * paragraph [0032] – paragraph [0050]; claims 1-10 * ----- | 1,2,11, 12 | |
| X | EP 2 514 013 B1 (MASSACHUSETTS INST TECHNOLOGY [US]) 17 May 2017 (2017-05-17) * paragraph [0163] – paragraph [0191] * ----- | 1-4,7,8, 10-13 | |

**TECHNICAL FIELDS SEARCHED (IPC)**

H01M

The present search report has been drawn up for all claims

| Place of search | Date of completion of the search | Examiner |
|---|---|---|
| Munich | 14 July 2023 | Wiedemann, Eric |

EPO FORM 1503 03.82 (P04C01)

## ANNEX TO THE EUROPEAN SEARCH REPORT
## ON EUROPEAN PATENT APPLICATION NO.

EP 23 15 3090

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2023

| Patent document cited in search report | | Publication date | Patent family member(s) | | Publication date |
|---|---|---|---|---|---|
| US 2022285709 | A1 | 08-09-2022 | AU | 2020326532 A1 | 03-03-2022 |
| | | | CA | 3148813 A1 | 11-02-2021 |
| | | | CN | 114521303 A | 20-05-2022 |
| | | | EP | 4008037 A1 | 08-06-2022 |
| | | | JP | 2022543252 A | 11-10-2022 |
| | | | KR | 20220098124 A | 11-07-2022 |
| | | | US | 2022285709 A1 | 08-09-2022 |
| | | | WO | 2021025925 A1 | 11-02-2021 |
| KR 20190085370 | A | 18-07-2019 | NONE | | |
| EP 2514013 | B1 | 17-05-2017 | CA | 2784745 A1 | 14-07-2011 |
| | | | CN | 102763254 A | 31-10-2012 |
| | | | CN | 104701504 A | 10-06-2015 |
| | | | EP | 2514013 A2 | 24-10-2012 |
| | | | JP | 5944830 B2 | 05-07-2016 |
| | | | JP | 2013515335 A | 02-05-2013 |
| | | | JP | 2015111600 A | 18-06-2015 |
| | | | KR | 20120104358 A | 20-09-2012 |
| | | | WO | 2011084649 A2 | 14-07-2011 |

EPO FORM P0459

For more details about this annex : see Official Journal of the European Patent Office, No. 12/82